# EUROPÄISCHE PATENTSCHRIFT

(11) **EP 3 022 138 B1**
(45) Veröffentlichungstag und Bekanntmachung des Hinweises auf die Patenterteilung: **04.10.2017**
(21) Anmeldenummer: 14738782.3
(22) Anmeldetag: 03.07.2014
(51) Int. Cl.: B65G 47/71, B65G 47/86, B65G 54/02

(54) **VERFAHREN SOWIE TRANSPORTVORRICHTUNG ZUM UMFORMEN EINES ERSTEN BEHÄLTERSTROMS IN EINEN ZWEITEN BEHÄLTERSTROM**
METHOD AND TRANSPORT DEVICE FOR CONVERTING A FIRST CONTAINER STREAM INTO A SECOND CONTAINER STREAM
PROCÉDÉ ET DISPOSITIF DE TRANSPORT POUR LE RÉAGENCEMENT D'UN PREMIER FLUX DE CONTENANTS EN UN SECOND FLUX DE CONTENANTS

(30) Priorität: 16.07.2013 DE 102013107565
(43) Veröffentlichungstag der Anmeldung: 25.05.2016
(73) Patentinhaber: KHS GmbH, 44143 Dortmund (DE)
(72) Erfinder: KEIL, Gernot, 55595 Braunweiler (DE); HAHN, Carsten, 48153 Münster (DE); SCHOLZ, Petra, 44145 Dortmund (DE); KRÄMER, Klaus, 44267 Dortmund (DE); STUHLMANN, Christopher, 34497 Korbach (DE); STIENEN, Thomas, 59425 Unna (DE); LIPPERT, Rene Bastian, 30163 Hannover (DE)
(86) Internationale Anmeldenummer: PCT/EP2014/064140
(87) Internationale Veröffentlichungsnummer: WO 2015/007529

(56) Entgegenhaltungen:
- EP-A1- 1 123 884
- DE-A1- 4 134 735
- DE-A1-102006 023 531
- DE-B3-102006 025 090

## Beschreibung

Die Erfindung bezieht sich auf ein Verfahren gemäß Oberbegriff Patentanspruch 1 sowie auf eine Transportvorrichtung gemäß Oberbegriff Patentanspruch 4. Vorwiegend in der Getränkeindustrie stellt sich vielfach das Problem, einen z.B. von einer Behälterbehandlungsmaschine, beispielsweise von einer Etikettiermaschine zugeführten und in der Regel einspurigen Behälterstrom, in welchem die Behälter in Transportrichtung in einer einzigen Behälterreihe angeordnet sind, in einen breiteren oder mehrspurigen Behälterstrom umzuformen, in dem die Behälter mehrere in Transportrichtung orientierte Behälterreihen bilden. Dieser mehrspurige Behälterstrom wird dann z.B. einer weiteren Behälterbehandlungsmaschine zugeführt, beispielsweise einer Packmaschine, in der aus dem mehrspurigen Behälterstrom gebildete mehrreihige Behältergruppen in Behälterkästen verpackt und/oder zu Packeinheiten oder Gebinden zusammengefasst werden.

Bekannt ist beispielsweise eine Transportvorrichtung (DE 35 05 253 C2), die zum Umformen eines ersten schmäleren Behälterstroms in einen zweiten breiteren Behälterstrom dient und aus einer ersten als Zuförderer ausgebildeten Transportstrecke, aus einer Überleit- oder Umformstrecke und aus einer als Abförderer dienenden zweiten Transportstrecke besteht. Die Umformstrecke ist dabei von einer Vielzahl von nebeneinander angeordneten Plattenbändern gebildet ist, deren einzelne Geschwindigkeiten sich gegenüber der ersten Transportstrecke allmählich verlangsamen und auf diese Weise aus dem ersten Behälterstrom den zweiten Behälterstrom bilden.
Bekannt ist weiterhin eine Transportvorrichtung zum AuseinanderfÜhren eines ersten einspurigen Behälterstroms, d,h, zum Umformen des einspurigen Behälterstromes in einen zweiten breiteren Behälterstrom bzw. (US 1719897, DE 43 43 477 C1), wobei einzelne Behälter in einen eine Umformstrecke bildenden Kanal geführt werden, der kontinuierlich hin- und hergeschwenkt werden kann und auf diese Weise eine Verteilung der am Ende aus dem Kanal auslaufenden Behälter bewirkt. Weiterhin ist aus der DE 41 34 735 A1 eine Transfervorrichtung bekannt, bei der mittels endlos umlaufender Sauggreifer, Behälter auf parallel laufende Transportbänder quer verschoben werden.
Ein gewisser Nachteil dieser bekannten Transportvorrichtung besteht darin, dass der als Umformstrecke dienende Kanal eine relativ große Baulänge für die Transportvorrichtung bedingt.
Bekannt ist es weiterhin auch, zum Umformen beispielsweise eines einspurigen Behälterstroms in einen breiteren Behälterstrom steuerbare, die Behälter umlenkende Klappen vorzusehen. Nachteilig hierbei ist, dass die Steuerung und Bewegung dieser Klappen und damit das seitliche Verschieben derart erfolgen müssen, dass die jeweilige Klappe bereits aus der Bewegungsbahn eines Behälters, der auf einen mit der Klappe umgelenkten Behälter folgt, heraus bewegt ist, bevor dieser Behälter die entsprechende Klappe erreicht. Dies erfordert schnelle Steuer- und Bewegungsvorgänge für die Klappen und führt in der Regel auch zu hohen seitlichen Beschleunigungen der Behälter beim Umlenken mit einer starken Beeinträchtigung der Standfestigkeit der Behälter auf der entsprechenden Transportstrecke.

Das Dokument DE 10 2006 023 531 A1 offenbart ein Verfahren gemäß Oberbegriff Patentanspruch 1 sowie eine Transportvorrichtung gemäß Oberbegriff Patentanspruch 4. Aufgabe der Erfindung ist es, ein Verfahren aufzuzeigen, welches die vorgenannten Nachteile vermeidet und bei kurzer Bauweise einer für das Umformen erforderlichen Transportvorrichtung eine zuverlässige Umformung eines ersten Behälterstroms in einen zweiten Behälterstrom mit einer vom ersten Behälterstrom abweichenden Breite und/oder Anzahl von Spuren oder Behälterreihen ermöglicht Zur Lösung dieser Aufgabe ist ein Verfahren entsprechend dem Patentanspruch 1 ausgebildet. Eine Transportvorrichtung ist Gegenstand des Patentanspruchs 4.
Bevorzugt dient die Erfindung zum Umformen eines beispielsweise von einer Behälterbehandlungsmaschine, z.B. Etikettiermaschine zugeführten einspurigen Behälterstroms in einen mehrspurigen Behälterstrom, der einer weiteren Behälterbehandlungsmaschine, beispielsweise einer Packmaschine zugeführt wird. Besonders bevorzugt gelangt der mehrspurige Behälterstrom unmittelbar nach seiner Bildung zu oder in eine Packmaschine. Beispielsweise erfolgt bereits die Bildung des Behälterstromes unmittelbar im Einlaufbereich oder sogar schon im Bereich der Gassenbildung oder Gasseneinteilung einer Packmaschine.

Die Umformstrecke weist bei der erfindungsgemäßen Transportvorrichtung wenigstens eine Behältermitnahme oder Behälteraufnahme auf, die in einer Transportrichtung der Umformstrecke zwischen wenigstens einer ersten Übergabeposition an der ersten Transportstrecke gesteuert an eine zweite Übergabeposition an der zweiten Transportstrecke bewegbar ist, und zwar zur Aufnahme eines Behälters an der ersten Übergabeposition, zum Mitführen und zur Abgabe dieses Behälters an einer zweiten Übergabeposition an die zweite Transportstrecke. Dient die Transportvorrichtung zum Umformen des ersten Behälterstroms in einen zweiten mehrspurigen Behälterstrom, so erfolgt die Übergabe der Behälter jeweils gesteuert an einer jeder Spur zugeordneten zweiten Übergabeposition.

Bei einer bevorzugten Ausführungsform weist die Umformstrecke mehrere derartige Behälteraufnahmen auf, die dann vorzugsweise unabhängig voneinander gesteuert bewegbar sind.

Um ein kontinuierliches und schnelles Arbeiten der Umformstrecke zu ermöglichen, ist die wenigstens eine Behälteraufnahme vorzugsweise auf einer geschlossenen Umlaufbahn der Umformstrecke bewegbar. Eine für das Umformen genutzte Teillänge dieser Umlaufbahn erstreckt sich zwischen der wenigstens einen ersten Übergabeposition an der ersten Transportstrecke und zweiten Übergabepositionen an der zweiten Transportstrecke. Weist die zweite Transportstrecke mehrere Spuren auf, so ist für jede dieser Spuren eine zweite Übergabeposition vorgesehen.

Die wenigstens eine Behälteraufnahme ist mit einem Behältermitführelement und/oder Behältergreifer ausgebildet, und zwar für ein Erfassen oder Greifen des jeweiligen Behälters an der ersten Übergabeposition, für ein Mitführen dieses Behälters und für ein Übergeben des Behälters an die zweite Transportstrecke ausgebildet.

Die Transportstrecken und/oder deren Spuren sind beispielsweise von Transportbändern, vorzugsweise in Form von Scharnierbandketten gebildet, auf denen die Behälter mit ihrem Boden aufstehend und mit ihren Behälterachsen in vertikaler Richtung oder im Wesentlichen in vertikaler Richtung orientiert angeordnet sind. Auch andere Transporteure sind für die Transportstrecken und deren Spuren möglich, beispielsweise Transporteure für einen hängenden Transport von Behältern, insbesondere von aus Kunststoff (z.B. PET) hergestellten Behälter oder Flaschen.
Bei einer bevorzugten Ausführungsform ist das Behältermitführelement und/oder der Behältergreifer der Behälteraufnahme an einem Träger vorgesehen, der an einem Stator der Umformstrecke bewegbar oder verfahrbar geführt ist und im Zusammenwirken mit dem Stator einen Läufer eines elektrischen Linearantriebs oder elektrischen Linearmotors bildet. Bei einer bekannten Ausführungsform eines solchen Linearmotors sind entlang der Bewegungsbahn der wenigstens einen Behälteraufnahme in ihrer Polung abwechselnde Permanentmagnete vorgesehen und der Träger der wenigstens einen Behälteraufnahme weist wenigstens eine mit den Permanentmagneten zusammenwirkende Magnetspule auf.
Bei anderen bekannten Ausführungsformen von Linearmotoren können Permanentmagnete und Magnetspulen auch vertauscht werden. Beide bekannten Bauarten eignen sich zur Anwendung bei der vorliegenden Erfindung.
Unter "Behältergreifer" ist da im Sinne der Erfindung ganz allgemein ein Funktionselement zu verstehen, welches zum Fassen, Halten und/oder Mitführen der Behälter geeignet ist.
Der Ausdruck "im Wesentlichen" oder "etwa" bedeutet im Sinne der Erfindung Abweichungen von jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: in vereinfachter schematischer Darstellung und in Draufsicht eine Transportvorrichtung zum Umformen eines Behälterstroms kleinerer Breite in Form eines einspurigen Behälterstroms in einen Behälterstrom größerer Breite in Form eines mehrspurigen Behälterstrom;
- Fig. 2: in vereinfachter schematischer Darstellung eine Umformstrecke der Transportvorrichtung der Figur 1;
- Fig. 3: in einer vergrößerter Teildarstellung eine Ausführungsform der erfindungsgemäßen Transportvorrichtung im Bereich der Umformstrecke;
- Fig. 4: in schematischer Darstellung eine der Behälteraufnahmen der Umformstrecke der Figur 3;
- Fig. 5: eine Darstellung ähnlich Figur 3 bei einer weiteren Ausführungsform der Transportvorrichtung;
- Fig. 6: in einer Darstellung ähnlich Figur 4 eine Behälteraufnahme der Umformstrecke der Figur 5.

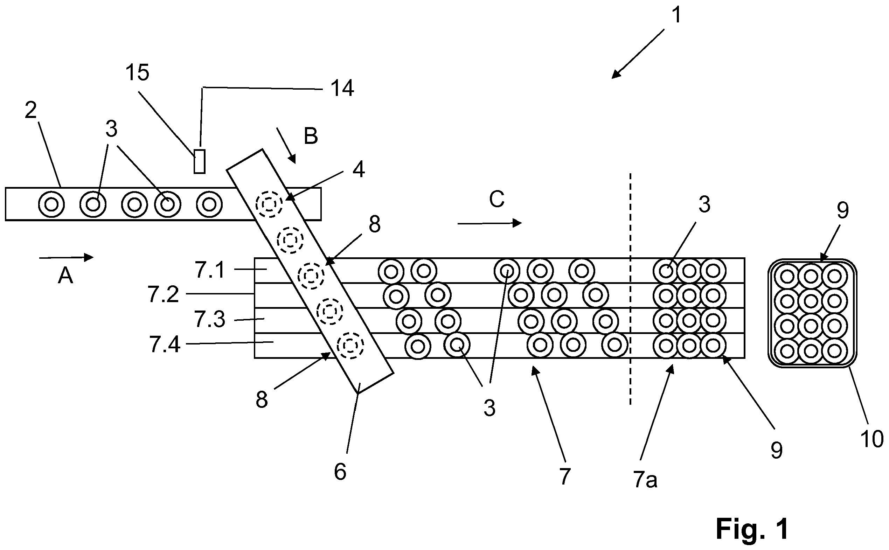

Die in der Figur 1 allgemein mit 1 bezeichnete Transportvorrichtung, die zum Umformen eines einspurigen Behälterstroms in einen mehrspurigen Behälterstrom dient, umfasst u.a. eine erste Transportstrecke 2, auf der Behälter 3 mit ihren Behälterachsen in vertikaler Richtung orientiert in einer ersten Transportrichtung (Pfeil A) zugeführt werden, und zwar von einer nicht dargestellten Behälterbehandlungsmaschine, beispielsweise von einer Etikettiermaschine. Am Ende der Transportstrecke 2 bzw. an einer dort gebildeten und mit 4 bezeichneten Übergabeposition wird jeder Behälter 3 von einem Behältermitnehmer oder einer Behälteraufnahme 5 einer Umformstrecke 6 erfasst und mit dieser Behälteraufnahme 5 in einer Transportrichtung B, die schräg zur Transportrichtung A orientiert ist, an die Transportstrecke 7 übergeben, und zwar an einer der dortigen Übergabepositionen 8, die quer zur Transportrichtung C versetzt vorgesehen sind. Bei der dargestellten Ausführungsform ist die Transportstrecke 7 größerer Breite als mehrspurige Transportstrecke ausgebildet, auf der die Behälter 3 als mehrspuriger Behälterstrom in einer Transportrichtung C gefördert werden. Jeder Spur 7.1 - 7.4 der Transportstrecke 7 ist eine Übergabeposition zugeordnet. Bei der dargestellten Ausführungsform weist die mehrspurige Transportstrecke 7 insgesamt vier Spuren oder voneinander getrennte Gassen für die dort wiederum mit ihren Behälterachsen in vertikaler Richtung orientierten Behälter 3 auf.

Bei der dargestellten Ausführungsform ist weiterhin die Transportrichtung C parallel zur Transportrichtung A orientiert, wobei die Transportrichtung B ebenfalls schräg zur Transportrichtung C verläuft. Dieses ist jedoch nicht zwingend.
Die Transportstrecke 2 befindet sich seitlich von der Transportstrecke 7. Auf einem in der Figur 1 mit 7a bezeichneten Abschnitt der Transportstrecke 7 erfolgt ein Abtrennen und Verdichten der mehrspurigen Behälterströme in der Weise, dass jeweils Behältergruppen 9 gebildet werden, die in vier in Transportrichtung C orientierten Reihen jeweils drei Behälter 3 aufweisen und somit eine Einheit bilden, die beispielsweise mit Hilfe eines Mehrfachgreifers einer Packmaschine in bereitgestellte Behälterkästen 10 eingebracht oder zu Verpackungseinheiten oder Gebinden verbunden werden.

Die Umformstrecke 6 besteht bei der dargestellten Ausführungsform aus einem Stator 11 und aus einer Vielzahl von Behälteraufnahmen 5, die am Stator 11 auf einer in sich geschlossenen Bewegungsbahn 6.1 geführt sind, und zwar derart, dass sich die Behälteraufnahmen 5 auf einem horizontalen oder im Wesentlichen horizontalen Abschnitt dieser Bewegungsbahn 6.1, der das Umformen des einspurigen Behälterstroms in den breiteren, mehrspurigen Behälterstrom bewirkt, in der Transportrichtung B von der Transportstrecke 2 an die Transportstrecke 7 bewegen und auf einem weiteren Teil dieser Bewegungsbahn 6.1 jeweils an die Transportstrecke 2 bzw. an die dortige Übergabeposition 4 zurückbewegt werden. Die Behälteraufnahmen 5 bestehen hierfür bei der dargestellten Ausführungsform u.a. aus einem Träger 12, der am Stator 11 geführt ist, und aus einem Behältergreifer 13, der z.B. für ein Greifen der Behälter 3 an ihrer verschlossenen Behältermündung ausgebildet ist.

Die Träger 12 bilden Läufer eines elektrischen Linearantriebs, der den oberhalb der horizontalen Transportebene der Transportstrecken 2 und 7 angeordneten Stator 11 dieses Antriebs aufweist. Die Bewegung der Läufer sind bevorzugt individuell steuerbar, sodass auch die Behälteraufnahmen 5 zumindest auf dem Teil der Bewegungsbahn 6.1 zwischen der Transportstrecke 2 und den Spuren 7.1 - 7.4 der mehrspurigen Transportstrecke 7 individuell gesteuert bewegbar sind, insbesondere auch in der Form, dass an der Übergabeposition 4 immer eine Behälteraufnahme 5 bereitsteht, bevor ein Behälter 3 auf der Transportstrecke 2 die Übergabeposition 4 erreicht.

Bei der dargestellten Ausführungsform ist weiterhin die Transport- oder Fordergeschwindigkeit der einzelnen Spuren 7.1 - 7.4 bzw. der entsprechenden Transporteure individuell steuerbar, wie dies nachstehend noch näher erläutert wird. Ausführungsformen, bei denen die Möglichkeit der individuellen Steuerbarkeit der Transporteure nicht besteht, sind ebenfalls ausführbar, doch bieten diese weniger Möglichkeiten, einer nachfolgenden Packmaschine bereits eine vollständige Behältergruppe 9 zuzuführen.

Die Steuerung der Transportvorrichtung 1 und dabei insbesondere der Umformstrecke 6, der dortigen Behälteraufnahmen 5 sowie der Transportstrecke 7 erfolgt über eine elektronische Steuereinrichtung 14, die beispielsweise der Prozessrechner einer die Transportvorrichtung 1 aufweisenden Anlage ist, und zwar auch abhängig von Steuersignalen, die von an den Transportstrecken 2 und 7 sowie an der Umformstrecke 6 vorgesehenen Sensoren 15 geliefert werden.

Für die Transportvorrichtung 1 ist beispielsweise folgendes Verfahren möglich:
Erreicht ein Behälter 3 auf der Transportstrecke 2 die Übergabeposition 4, so wird er von der dort bereitstehenden Behälteraufnahme 5 erfasst und mit dieser in Transportrichtung B an eine der Übergabepositionen 8 oder an eine der Spuren 7.1 - 7.4 bewegt und an diese übergeben. Bevorzugt erfolgt die Steuerung dabei so, dass mit der Umformstrecke 6 an eine der Spuren 7.1 - 7.4 eine Anzahl von Behältern 3 übergeben wird, die zumindest der Anzahl der Behälter 3 in der entsprechenden Reihe der Behältergruppe 9 entspricht, und dass erst dann mit der Umformstrecke 6 Behälter 3 an eine weitere der Spuren 7.1 - 7.4 übergeben werden, also in jeweils einem mehrtaktigen Arbeitszyklus sämtliche Spuren 7.1 - 7.4 nacheinander mit der benötigten Anzahl an Behältern 3 versehen werden. Ist dabei die erforderliche Anzahl an Behältern 3 an eine Spur 7.1 - 7.7 gelangt, so wird die Transportgeschwindigkeit dieser Spur reduziert, und zwar beispielsweise auf eine Transportgeschwindigkeit, die der Arbeitsgeschwindigkeit der auf die Transportstrecke 7 folgenden Behälterbehandlungsmaschine entspricht.

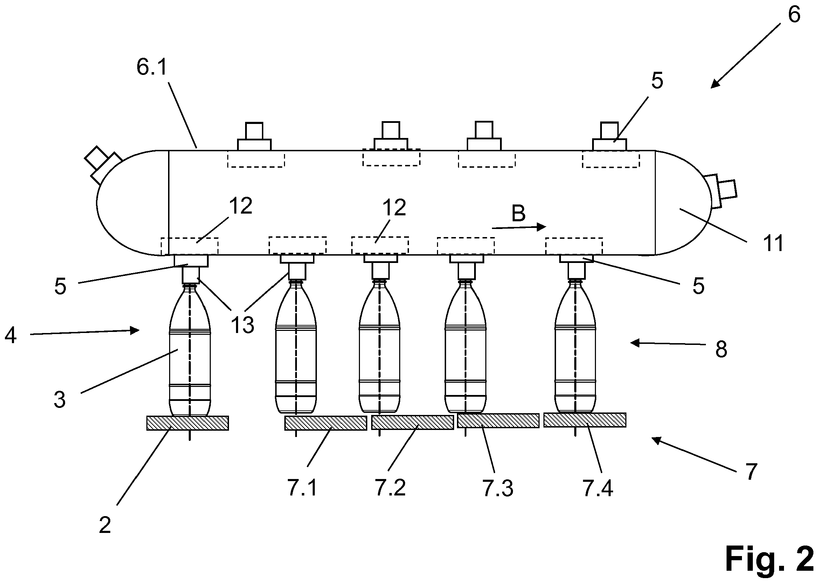

Durch die individuelle Steuerung der Bewegung der Behälteraufnahmen 5 ist es auch bei einem nicht gleichbleibenden Behälterabstand (Achsabstand), den die Behälter 3 auf der Transportstrecke 2 aufweisen, gewährleistet, dass jeweils eine noch freie Behälteraufnahme 5 an der Übergabeposition 4 bereitsteht, wenn ein Behälter 3 diese Position erreicht.
Für die Darstellung in den Figuren 1 und 2 wurde davon ausgegangen, dass die Behälter 2 mit ihrem Behälterboden auf der Transportstrecke 2 und 7 bzw. auf den diese Transportstrecken bildenden Transportbändern aufstehen. Selbstverständlich ist auch eine andere Ausbildung der Transportstrecken 2 und 7 bzw. der Spuren 7.1 - 7.4 möglich, beispielsweise für einen hängenden Transport der Behälter 3. Weiterhin wurde vorstehend davon ausgegangen, dass sich die Behälteraufnahmen 5 am Stator 11 auf einer geschlossenen Bewegungsbahn 6.1 bewegen, die in einer vertikalen Ebene angeordnet ist. Selbstverständlich ist auch eine andere Orientierung der geschlossenen Bewegungsbahn 6.1 möglich, beispielsweise kann die Bewegungsbahn 6.1 in einer horizontalen Ebene angeordnet sein.

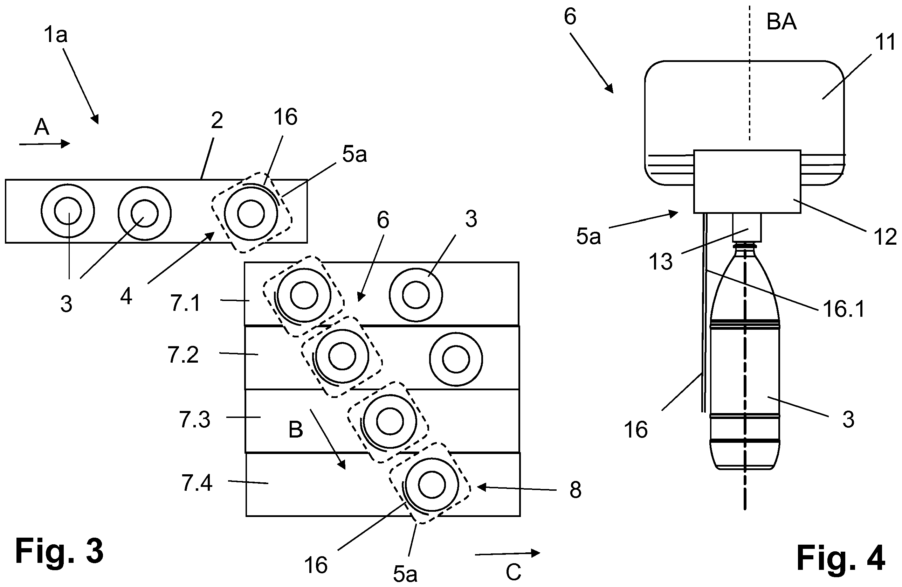

Die Figur 3 zeigt eine Transportvorrichtung 1a, die sich von der Transportvorrichtung 1 im Wesentlichen nur dadurch unterscheidet, dass anstelle der Behälteraufnahmen 5 oder aber auch zusätzlich zu der Behälteraufnahme 5 an der Umformstrecke 6 Behälteraufnahmen 5a vorgesehen sind, die zusätzlich zu dem jeweiligen Behältergreifer 13 ein Behälterabstützelement 16 aufweisen, welches ebenfalls an dem Träger 12 vorgesehen ist und eine um eine Achse parallel zur vertikalen Behälterachse BA konvex gekrümmte Behälterabstützfläche 16.1 bildet, und zwar für die Außen- bzw. Mantelfläche des jeweiligen Behälters 3. Das Behälterabstützelement 16, welches den Behälter 3 nur auf einem Teil seines Umfangs umschließt, ist um die Achse BA schwenkbar, und zwar derart, dass dieses Abstützelement die Übernahme des jeweiligen Behälters 3 an der Übergabeposition 4 nicht behindert, den Behälter 3 aber nach der Übergabe an die Behälteraufnahme 5a zur Aufnahme von Beschleunigungskräften abstützt, die insbesondere auch durch die Änderung der Transportrichtung an der Übergabeposition 4 auftreten.

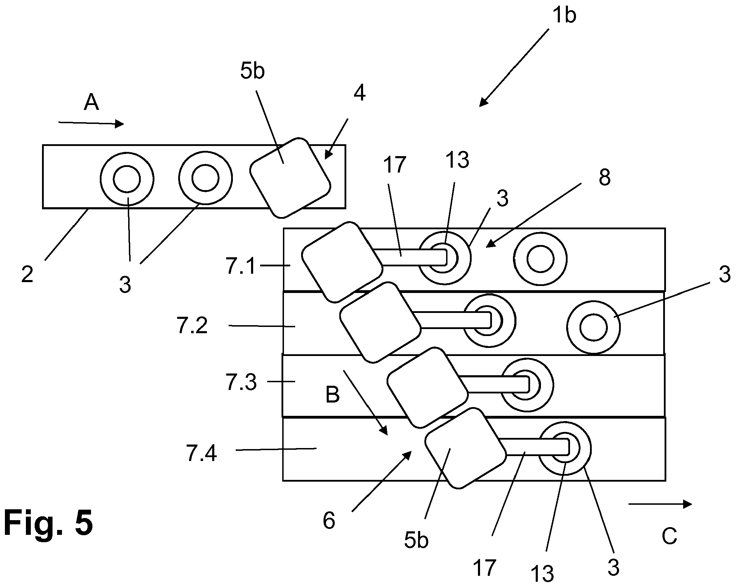

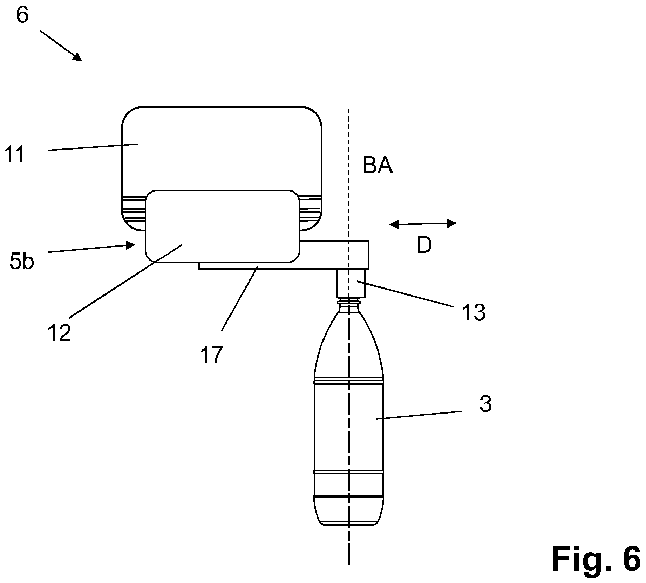

Die Figuren 5 und 6 zeigen eine Transportvorrichtung 1b, die sich von der Transportvorrichtung 1 dadurch unterscheidet, dass die dortigen Behälteraufnahmen 5b zugleich auch für eine translatorische Bewegung der Behältergreifer 13 ausgebildet sind, und zwar derart, dass bei der Abgabe des jeweiligen Behälters 3 an eine Spur 7.1 - 7.4 zunächst mit der Behälteraufnahme 5b der betreffende Behälter 3 in Transportrichtung C seitlich von dem Träger 12 wegbewegt wird. Hierfür ist jede Behälteraufnahme 5b bei der dargestellten Ausführungsform mit einem Arm 17 versehen, der axial und radial zur Behälterachse BA gesteuert verschiebbar am Träger 12 vorgesehen ist und den Behältergreifer trägt. Grundsätzlich kann dieses seitliche Versetzen der Behälter 3 für die Abgabe an die Transportstrecke 7 auch auf andere Weise erzeugt werden, beispielsweise durch eine Rotationsbewegung, z.B. dadurch, dass der jeweilige Arm 17 am zugehörigen Träger 12 um eine vertikale Achse gesteuert dreh- oder schwenkbar ist.

Beispielsweise ist vorgesehen, dass die Geschwindigkeit der Träger 12 nicht konstant ist. Beispielsweise ist vorgesehen, dass die Träger 12 in ihrer Bewegung in Richtung B zum Absetzen der Behälter 3 so weit abgebremst werden, dass die Behälter beim Aufstellen auf die Transportstrecke 7 - welche sich in Transportrichtung C bewegt - nicht umfallen. Dazu ist es weiterhin von großem Vorteil, wenn die Oberfläche des Transportbandes einen sehr niedrigen Reibwert aufweist. Dazu kann es vorgesehen sein, die Oberfläche des Transportbandes mit einem reibungsmindernden Wirkstoff zu behandeln, welcher beispielsweise durch Besprühen aufgebracht wird.
Ebenfalls kann es von großem Vorteil sein, die Bewegung der Arme 17 zum Absetzen der Behälter 3 so zu steuern, dass die Behälter beim Absetzen auf die Transportstrecke 7 ausschließlich oder im Wesentlichen eine Geschwindigkeit in Richtung der Transportrichtung C aufweisen.

### Bezugszeichenliste

- 1,1a,1b: Transportvorrichtung
- 2: Transportstrecke
- 3: Behälter
- 4: Übergabeposition
- 5, 5a, 5b: Behälteraufnahme
- 6, 6a, 6b: Umformstrecke
- 7: mehrspurige Transportstrecke
- 7.1 - 7.4: Spur der Transportstrecke 7
- 7a: Abschnitt der Transportstrecke 7
- 8: Übergabeposition
- 9: Behältergruppe
- 10: Behälterkasten oder Umverpackung
- 11: Stator
- 12: Träger
- 13: Behältergreifer
- 14: elektronische Steuereinrichtung
- 15: Sensor
- 16: Behälterabstützelement
- 16.1: Abstützfläche
- 17: Arm
- A, B, C: Transportrichtung
- D: Bewegungsrichtung des Armes 17

## Patentansprüche

1. Verfahren zum Umwandeln eines über eine erste Transportstrecke (2) in einer ersten Transportrichtung (A) zugeführten Behälterstrom in einen zweiten auf einer zweiten Transportstrecke (7) in einer zweiten Transportrichtung (C) weitergeführten Behälterstrom, wobei der erste Behälterstrom und der zweite Behälterstrom senkrecht zur ersten und zweiten Transportrichtung (A, C) eine unterschiedliche Breite aufweisen, unter Verwendung einer zwischen den Transportstrecken angeordneten Umformstrecke (6), wobei mit wenigstens einer Behälteraufnahme (5, 5a, 5b) mit einem Behältergreifer (13) der Umformstrecke (6) die an wenigstens eine erste Übergabeposition (4) der ersten Transportstrecke (2) geförderte Behälter (3) erfasst und mit dieser Behälteraufnahme (5, 5a, 5b) in einer dritten Transportrichtung (B) an unterschiedliche zweite Übergabepositionen (8), die an der zweiten Transportstrecke (7) quer zur zweiten Transportrichtung (C) verteilt vorgesehen sind, transportiert und dort an die zweite Transportstrecke (7) abgeben werden, wobei die wenigstens eine Behälteraufnahme (5, 5a, 5b) von einem an einem Stator (11) der Umformstrecke (6) geführten Träger (12) und von einem Behältergreifer (13) an dem Träger (12) gebildet ist, wobei die Behälteraufnahmen (5b) zugleich auch für eine translatorische Bewegung der Behältergreifer (13) ausgebildet sind, indem bei der Abgabe des jeweiligen Behälters (3) an eine Spur (7.1 - 7.4) der zweiten Transportstrecke (7) zunächst mit der Behälteraufnahme (5b) der betreffende Behälter (3) in zweiter Transportrichtung (C) seitlich von dem Träger (12) wegbewegt wird, wozu jede Behälteraufnahme (5b) mit einem Arm (17) versehen ist, welcher
(a) axial und radial zur Behälterachse (BA) gesteuert verschiebbar am Träger (12) vorgesehen ist und den Behältergreifer (13) trägt, oder wobei
(b) die Abgabe an die Transportstrecke (7) durch eine Rotationsbewegung des jeweiligen Arms (17) an dem zugehörigen Träger (12) erfolgt, indem der jeweilige Arm (17) um eine vertikale Achse gesteuert gedreht oder geschwenkt wird, **dadurch gekennzeichnet, dass** die Umfangs- oder Mantelfläche des jeweiligen Behälters (3) durch eine Abstützfläche (16.1) eines, an der Behälteraufnahme (5a) vorgesehenen Behälterabstützelements (16) abgestützt wird, welches eine vorzugsweise gewölbte Abstützfläche (16.1) für die Umfangs- oder Mantelfläche des jeweiligen Behälters (3) bilden, und dass das Behälterabstützelement (16) um eine vertikale oder im Wesentlichen vertikale Achse (BA) gesteuert schwenkbar ist.

2. Verfahren nach Anspruch 1, **dadurch gekennzeichnet, dass** bei mehrspuriger Ausbildung der zweiten Transportstrecke (7) die Behälter (3) jeweils an die Spuren (7.1 - 7.4) gesteuert abgegeben werden.

3. Verfahren nach Anspruch 1 oder 2, **gekennzeichnet durch** die Verwendung einer Vielzahl von individuell gesteuerten Behälteraufnahmen (5, 5a, 5b) der Umformstrecke (6).

4. Transportvorrichtung (1, 1a, 1b) zum Umwandeln eines über eine erste Transportstrecke (2) in einer ersten Transportrichtung (A) zugeführten Behälterstrom in einen zweiten auf einer zweiten Transportstrecke (7) in einer zweiten Transportrichtung (C) weitergeführten Behälterstrom, wobei der erste Behälterstrom und der zweite Behälterstrom senkrecht zur ersten und zweiten Transportrichtung (A, C) eine unterschiedliche Breite aufweisen, mit einer zwischen den Transportstrecken (2, 7) wirkenden Umformstrecke (6), mit der die an wenigstens eine erste Übergabeposition (4) der ersten Transportstrecke (2) geförderten Behälter (3) gesteuert an unterschiedliche quer zur zweiten Transportrichtung (C) verteilte zweite Übergabepositionen (8) der zweiten Transportstrecke (7) überführt werden, wobei die Umformstrecke (6) wenigstens eine gesteuert bewegbare Behälteraufnahme (5, 5a, 5b) aufweist, die in einer dritten Transportrichtung (B) der Umformstrecke (6) zwischen der wenigstens einen ersten Übergabeposition (4) und den zweiten Übergabepositionen (8) bewegbar ist und Mittel zum Greifen (13) jeweils eines Behälters (3) an der ersten Übergabeposition (4) zum Mitführen und zum Übergeben des Behälters (3) an eine zweiten Übergabeposition (8) der zweiten Transportstrecke (7) aufweist, wobei die wenigstens eine Behälteraufnahme (5, 5a) für eine gesteuerte Seitwärtsbewegung des Behältergreifers (13) bei der Abgabe des Behälters (3) an der zweiten Übergabeposition (8) ausgebildet ist, **dadurch gekennzeichnet, dass** die Behälteraufnahme (5, 5a, 5b) ein Behälterabstützelement (16) aufweist, welches eine vorzugsweise gewölbte Abstützfläche (16.1) für die Umfangs- oder Mantelfläche des jeweiligen Behälters (3) bilden, und dass das Behälterabstützelement (16) um eine vertikale oder im Wesentlichen vertikale Achse (BA) gesteuert schwenkbar ist.

5. Transportvorrichtung nach Anspruch 4, **dadurch gekennzeichnet, dass** die zweite Transportstrecke (7) mehrspurig mit mehreren Spuren (7.1 - 7.4) zur Ausbildung jeweils einer Behälterreihe ausgeführt ist.

6. Transportvorrichtung nach Anspruch 4 oder 5, **dadurch gekennzeichnet, dass** die erste Transportstrecke für einen Behälterstrom ausgebildet ist, bei dem die Anzahl der Behälterreihen oder Spuren kleiner ist als die Anzahl der Behälterreihen oder Spuren der zweiten Transportstrecke (7).

7. Transportvorrichtung nach Anspruch 6, **dadurch gekennzeichnet, dass** die erste Transportstrecke (2) für einen einspurigen und die zweite Transportstrecke (7) für einen mehrspurigen Behälterstrom ausgebildet sind.

8. Transportvorrichtung nach einem der Ansprüche 4-7, **dadurch gekennzeichnet, dass** die dritte Transportrichtung (B) zumindest eine Bewegungskomponente senkrecht zur ersten und/oder zweiten Transportrichtung (A, C) aufweist, vorzugsweise auch eine parallel zur ersten und/oder zweiten Transportrichtung (A, C) orientierte Bewegungskomponente.

9. Transportvorrichtung nach einem der Ansprüche 4-8, **dadurch gekennzeichnet, dass** die erste, zweite und dritte Transportrichtung (A, C, B) horizontale oder im Wesentlichen horizontale Transportrichtungen sind.

10. Transportvorrichtung nach einem der Ansprüche 4-9, **dadurch gekennzeichnet, dass** die wenigstens eine Behälteraufnahme (5, 5a, 5b) auf einer geschlossenen Bewegungsbahn (6.1) der Umformstrecke (6) oder eines Stators (11) dieser Umformstrecke (6) bewegbar ist, und dass sich ein Teil dieser Bewegungsbahn (6.1) zwischen der wenigstens einen ersten Übergabeposition (4) und den zweiten Übergabepositionen (8) erstreckt.

11. Transportvorrichtung nach einem der Ansprüche 4-10, **dadurch gekennzeichnet, dass** die Umformstrecke (6) wenigstens zwei, vorzugsweise mehr als zwei Behälteraufnahmen (5, 5a, 5b) aufweist, und dass die Bewegung jeder Behälteraufnahme (5, 5a, 5b) unabhängig von den übrigen Behälteraufnahmen (5, 5a, 5b) vorzugsweise individuell steuerbar ist.

12. Transportvorrichtung nach einem der Ansprüche 4-11, **dadurch gekennzeichnet, dass** die wenigstens eine Behälteraufnahme (5, 5a, 5b) von einem an einem Stator (11) der Umformstrecke (6) geführten Träger (12) und dem Behältergreifer (13) an dem Träger (12) gebildet ist.

13. Transportvorrichtung nach Anspruch 12, **dadurch gekennzeichnet, dass** der Träger (12) einen Läufer eines elektrischen Linearantriebs bildet.

14. Transportvorrichtung nach Anspruch 12, **dadurch gekennzeichnet, dass** die wenigstens eine Behälteraufnahme (5b) einen Arm (17) aufweist, der um eine Achse schwenkbar oder axial verschiebbar an dem Träger (12) der Behälteraufnahme (5b) vorgesehen ist, und dass am einen Ende des Armes (17) der Behältergreifer (13) vorgesehen ist.

## Claims

1. Method for converting a container stream delivered via a first transport section (2) in a first transport direction (A) into a second container stream further conveyed on a second transport section (7) in a second transport direction (C), wherein the first container stream and the second container stream have different widths perpendicularly to the first and second transport directions (A, C), using a conversion section (6) disposed between the transport sections, wherein the containers (3) being conveyed, with at least one container receiver (5, 5a, 5b), are gripped by a container gripper (13) on the conversion section (6) at least at one first transfer position (4) of the first transport section (2), and, with this container receiver (5, 5a, 5b), are transported in a third transport direction (B) to different second transfer positions (8), which are provided in such a way as to be distributed on the second transport section (7) transverse to the second transport direction (C), and are handed over there to the second transport section (7), wherein the at least one container receiver (5, 5a, 5b) is formed by a carrier (12) guided on a stator (11) of the conversion section (6), and by a container gripper (13) at the carrier (12), wherein the container receivers (5b) are at the same time also configured for a translational movement of the container gripper (13), in that, at the handover of the respective container (3) to a track (7.1 - 7.4) of the second transport section (7), the container (3) concerned, initially with the container receiver (5b), is moved further in the second transport direction (C) laterally by the carrier (12), for which purpose each container receiver (5b) is provided with an arm (17), which
(a) is provided at the carrier (12) such as to be displaceable in a controlled manner axially and radially to the container axis (BA), and carries the container gripper (13), or wherein
(b) the handover to the transport section (7) takes place by a rotational movement of the respective arm (17) at the associated carrier (12), in that the respective arm (17) is rotated or pivoted in a controlled manner about a vertical axis, **characterised in that** the circumferential surface or casing surface of the respective container (3) is supported by a support surface (16.1) of a container support element (16) provided at the container receiver (5a), which forms a preferably cambered support surface (16.1) for the circumferential surface or casing surface of the respective container (3), and that the container support element (16) can be pivoted in a controlled manner about a vertical or essentially vertical axis (BA).

2. Method according to claim 1, **characterised in that**, with a multi-track configuration of the second transport section (7), the containers (3) are handed over in each case in a controlled manner to the tracks (7.1 - 7.4).

3. Method according to claim 1 or 2, **characterised by** the use of a plurality of individually controlled container receivers (5, 5a, 5b) of the conversion section (6).

4. Transport device (1, 1a, 1b) for the conversion of a container stream delivered via a first transport section (2) in a first transport direction (A) into a second container stream further conveyed on a second transport section (7) in a second transport direction (C), wherein the first container stream and the second conveyor stream have different widths perpendicularly to the first and second transport directions (A, C), with a conversion section (6) taking effect between the transport sections (2, 7), with which the containers (3) conveyed to at least one first transfer position (4) of the first transport section (2) are transferred in a controlled manner to different second transport positions (8), distributed transversely to the second transport direction (C), of the second transport section (7), wherein the conversion section (6) comprises at least one container receiver (5, 5a, 5b) which is movable in a controlled manner and which is movable in a third transport direction (B) of the conversion section (6) between the at least one first transfer position (4) and the second transfer position (8), and comprises means for gripping (13) in each case one container (3) at the first transfer position (4), and conveying the container (3) and handing it over to a second transfer position (8) of the second transport section (7), wherein the at least one container receiver (5, 5a) is configured for a controlled sideways movement of the container gripper (13) at the handover of the container (3) at the second handover position (8), **characterised in that** the container receiver (5, 5a, 5b) comprises a container support element (16), which forms a preferably cambered support surface (16.1) for the circumferential surface or casing surface of the respective container (3), and that the container support element (16) can be pivoted in a controlled manner about a vertical or essentially vertical axis (BA).

5. Transport device according to claim 4, **characterised in that** the second transport section (7) is configured as multi-track with a plurality of tracks (7.1-7.4) for the forming of a row of containers in each case.

6. Transport device according to claim 4 or 5, **characterised in that** the first transport section is configured for a container stream with which the number of container rows or tracks is smaller than the number of container rows or tracks of the second transport section (7).

7. Transport device according to claim 6, **characterised in that** the first transport section (2) is configured for a single-track container stream, and the second transport section (7) is configured for a multi-track container stream.

8. Transport device according to any one of claims 4-7, **characterised in that** the third transport direction (B) comprises at least one movement component perpendicular to the first and/or second transport direction (A, C), and preferably also a movement component oriented parallel to the first and/or second transport direction (A, C).

9. Transport device according to any one of claims 4-8, **characterised in that** the first, second, and third transport direction (A C, B) are horizontal or essentially horizontal transport directions.

10. Transport device according to any one of claims 4-9, **characterised in that** the at least one container receiver (5, 5a, 5b) can be moved on a closed movement path (6.1) of the conversion section (6) or of a stator (11) of this conversion section (6), and that a part of this movement path (6.1) extends between the at least one first handover position (4) and the second handover positions (8).

11. Transport device according to any one of claims 4-10, **characterised in that** the conversion section (6) comprises at least two, and preferably more than two, container receivers (5, 5a, 5b), and that the movement of each container receiver (5, 5a, 5b) can be controlled independently of the other container receivers (5, 5a, 5b), preferably individually.

12. Transport device according to any one of claims 4-11, **characterised in that** the at least one container receiver (5, 5a, 5b) is formed from a carrier (12) guided at a stator (11) of the conversion section (6) and from the container gripper (13) at the carrier (12).

13. Transport device according to claim 12, **characterised in that** the carrier (12) forms a rotor of an electrical linear drive.

14. Transport device according to claim 12, **characterised in that** the at least one container receiver (5b) comprises an arm (17) which can be pivoted about an axis or is provided such as to be axially displaceable at the carrier (12) of the container receiver (5b), and that the container gripper (13) is provided at one end of the arm (17).

## Revendications

1. Procédé servant à transformer un flux de contenants amenés dans une première direction de transport (A) sur un premier trajet de transport (2) en un deuxième flux de contenants continuant à être guidé dans une deuxième direction de transport (C) sur un deuxième trajet de transport (7), dans lequel le premier flux de contenants et le deuxième flux de contenants présentent, de manière perpendiculaire par rapport à la première et à la deuxième direction de transport (A, C), une largeur différente, en utilisant un trajet de mise en forme (6) disposé entre les trajets de transport, dans lequel les contenants (3) convoyés à au moins une première position de transfert (4) du premier trajet de transport (2) sont saisis avec au moins un logement de contenant (5, 5a, 5b) avec un système de préhension de contenant (13) du trajet de mise en forme (6), sont transportés avec ledit logement de contenant (5, 5a, 5b) dans une troisième direction de transport (B) à différentes deuxièmes positions de transfert (8), qui sont prévues de manière répartie de manière transversale par rapport à la deuxième direction de transport (C) au niveau du deuxième trajet de transport (7) et y sont transférés au deuxième trajet de transport (7), dans lequel l'au moins un logement de contenant (5, 5a, 5b) est formé par un support (12) guidé au niveau d'un stator (11) du trajet de mise en forme (6) et par un système de préhension de contenant (13), au niveau du support (12), dans lequel les logements de contenants (5b) sont réalisés dans le même temps également en vue d'un déplacement par translation des systèmes de préhension de contenant (13) en ce que le contenant (3) concerné est éloigné latéralement du support (12) dans la deuxième direction de transport (C) lors du transfert du contenant (3) respectif à une voie (7.1 - 7.4) du deuxième trajet de transport (7) en premier lieu avec le logement de contenant (5b), chaque logement de contenant (5b) étant à cet effet pourvu d'un bras (17), qui
(a) est prévu de manière à pouvoir coulisser au niveau du support (12) de manière commandée axialement et radialement par rapport à l'axe de contenant (BA) et supporte le système de préhension de contenant (3) ou dans lequel
(b) le transfert au trajet de transport (7) est effectué par un déplacement en rotation du bras (17) respectif au niveau du support (12) associé en ce que le bras (17) respectif est tourné ou pivoté de manière commandée autour d'un axe vertical, **caractérisé en ce que** la surface périphérique ou extérieure du contenant (3) respectif est soutenue par une surface de soutien (16.1) d'un élément de soutien de contenant (16) prévu au niveau du logement de contenant (5a), lequel forme une surface de soutien (16.1) de préférence bombée pour la surface périphérique ou extérieure du contenant (3) respectif, et que l'élément de soutien de contenant (16) peut pivoter de manière commandée autour d'un axe (BA) vertical ou sensiblement vertical.

2. Procédé selon la revendication 1, **caractérisé en ce que** dans le cas d'une réalisation à plusieurs voies du deuxième trajet de transport (7), les contenants (3) sont transférés respectivement de manière commandée aux voies (7.1 - 7.4).

3. Procédé selon la revendication 1 ou 2, **caractérisé par** l'utilisation d'une pluralité de logements de contenant (5, 5a, 5b) commandés individuellement du trajet de mise en forme (6).

4. Dispositif de transport (1, 1a, 1b) servant à transformer un flux de contenants amené dans une première direction de transport (A) sur un premier trajet de transport (2) en un deuxième flux de contenants continuant à être guidé dans une deuxième direction de transport (C) sur un deuxième trajet de transport (7), dans lequel le premier flux de contenants et le deuxième flux de contenants présentent, de manière perpendiculaire par rapport à la première et à la deuxième direction de transport (A, C), une largeur différente, avec un trajet de mise en forme (6) agissant entre les trajets de transport (2, 7), à l'aide duquel les contenants (3) convoyés à au moins une première position de transfert (4) du premier trajet de transport (2) sont transférés de manière commandée à différentes deuxièmes positions de transfert (8), réparties de manière transversale par rapport à la deuxième direction de transport (C), du deuxième trajet de transport (7), dans lequel le trajet de mise en forme (6) présente au moins un logement de contenant (5, 5a, 5b) pouvant être déplacé de manière commandée, lequel peut être déplacé dans une troisième direction de transport (B) du trajet de mise en forme (6) entre l'au moins une première position de transfert (4) et les deuxièmes positions de transfert (8) et qui présente des moyens (13) de préhension de respectivement un contenant (3) au niveau de la première position de transfert (4) servant à entraîner et à transférer le contenant (3) à une deuxième position de transfert (8) du deuxième trajet de transport (7), dans lequel l'au moins un logement de contenant (5, 5a) est réalisé en vue d'un déplacement latéral commandé du système de préhension de contenant (13) lors de la distribution du contenant (3) à la deuxième position de transfert (8), **caractérisé en ce que** le logement de contenant (5, 5a, 5b) présente un élément de soutien de contenant (16), qui forme une surface de soutien (16.1) de préférence bombée pour la surface périphérique ou extérieure du contenant (3) respectif, et que l'élément de soutien de contenant (16) peut être pivoté de manière commandée autour d'un axe (BA) vertical ou sensiblement vertical.

5. Dispositif de transport selon la revendication 4, **caractérisé en ce que** le deuxième trajet de transport (7) est réalisé avec plusieurs voies (7.1 -7.4) afin de réaliser respectivement une rangée de contenants.

6. Dispositif de transport selon la revendication 4 ou 5, **caractérisé en ce que** le premier trajet de transport est réalisé pour un flux de contenants, dans lequel le nombre des rangées de contenants ou de voies est inférieur au nombre des rangées de contenants ou de voies du deuxième trajet de transport (7).

7. Dispositif de transport selon la revendication 6, **caractérisé en ce que** le premier trajet de transport (2) est réalisé pour un flux de contenants à une voie et le deuxième trajet de transport (7) est réalisé pour un flux de contenants à plusieurs voies.

8. Dispositif de transport selon l'une quelconque des revendications 4 - 7, **caractérisé en ce que** la troisième direction de transport (B) présente au moins une composante de déplacement de manière perpendiculaire par rapport à la première et/ou à la deuxième direction de transport (A, C), de préférence également une composante de déplacement orientée de manière parallèle par rapport à la première et/ou à la deuxième direction de transport (A, C).

9. Dispositif de transport selon l'une quelconque des revendications 4 - 8, **caractérisé en ce que** la première, la deuxième et la troisième direction de transport (A, C, B) sont des directions de transport horizontales ou sensiblement horizontales.

10. Dispositif de transport selon l'une quelconque des revendications 4 - 9, **caractérisé en ce que** l'au moins un logement de contenant (5, 5a, 5b) peut être déplacé sur une trajectoire de déplacement (6.1) fermée du trajet de mise en forme (6) ou d'un stator (11) dudit trajet de mise en forme (6), et qu'une partie de ladite trajectoire de déplacement (6.1) s'étend entre l'au moins une première position de transfert (4) et les deuxièmes positions de transfert (8).

11. Dispositif de transport selon l'une quelconque des revendications 4 -10, **caractérisé en ce que** le trajet de mise en forme (6) présente au moins deux, de préférence plus de deux logements de contenant (5, 5a, 5b), et que le déplacement de chaque logement de contenant (5, 5a, 5b) peut être commandé de préférence individuellement indépendamment des logements de contenant (5, 5a, 5b) restants.

12. Dispositif de transport selon l'une quelconque des revendications 4 -11, **caractérisé en ce que** l'au moins un logement de contenant (5, 5a, 5b) est formé par un support (12) guidé au niveau d'un stator (11) du trajet de mise en forme (6) et par le système de préhension de contenant (13), au niveau du support (12).

13. Dispositif de transport selon la revendication 12, **caractérisé en ce que** le support (12) forme un induit d'un entraînement linéaire électrique.

14. Dispositif de transport selon la revendication 12, **caractérisé en ce que** l'au moins un logement de contenant (5b) présente un bras (17), qui est prévu de manière à pouvoir pivoter autour d'un axe ou de manière à pouvoir coulisser de manière axiale au niveau du support (12) du logement de contenant (5b), et que le système de préhension de contenants (13) est prévu au niveau d'une extrémité du bras (17).
